# EUROPÄISCHE PATENTANMELDUNG

(11) **EP 4 611 133 A1**
(43) Veröffentlichungstag der Anmeldung: **03.09.2025**
(21) Anmeldenummer: 24159976.0
(22) Anmeldetag: 27.02.2024
(51) Int. Cl.: H01M 50/107, H01M 50/213, H01M 50/233, H01M 50/264

(54) **AKKUZELLENTRÄGER, AKKUPACK UND VERFAHREN**

(71) Anmelder: Hilti Aktiengesellschaft, 9494 Schaan (LI)
(72) Erfinder: Harbaum, Julian, 82380 Peißenberg (DE); Seltmann, Daniel, 86842 Türkheim (DE)
(74) Vertreter: Hilti Aktiengesellschaft Corporate Intellectual Property

(57) **Zusammenfassung**

Akkuzellenträger mit einer in axialer Richtung darin eingeschobenen zylindrischen Akkuzelle, wobei die Akkuzelle mittels eines aufgelöteten metallischen Zellverbinders elektrisch kontaktiert ist, wobei der Akkuzellenträger einen stirnseitig angeordneten Spanndeckel aufweist, der in axialer Richtung durch den Zellverbinder an der Akkuzelle gehalten wird.

## Beschreibung

Die vorliegende Erfindung betrifft einen Akkuzellenträger mit einer in axialer Richtung darin eingeschobenen zylindrischen Akkuzelle, wobei die Akkuzelle mittels eines aufgelöteten metallischen Zellverbinders elektrisch kontaktiert ist.

Solche Akkuzellenträger sind grundsätzlich aus dem Stand der Technik bekannt und kommen beispielsweise bei Akkupacks von elektrischen Handwerkzeugmaschinen zum Einsatz. Der Akkuzellenträger schützt typischerweise die Akkuzelle gegen Stoßeinwirkung.

Es ist Aufgabe der vorliegenden Erfindung einen Akkuzellenträger bereitzustellen, der einfach und sicher herstellbar ist. Es ist ebenfalls Aufgabe der Erfindung ein Verfahren zum Herstellen eines Akkuzellenträgers anzugeben.

Bezüglich des Akkuzellenträgers wird die Aufgabe dadurch gelöst, dass der Akkuzellenträger einen stirnseitig angeordneten Spanndeckel aufweist, der in axialer Richtung durch den Zellverbinder an der Akkuzelle gehalten wird.

In einer besonders bevorzugten Ausgestaltung ist der Zellverbinder abschnittsweise in den Spanndeckel eingebettet. Es hat sich als vorteilhaft herausgestellt, wenn der Spanndeckel aus Kunststoff besteht. Der Zellverbinder kann mittels Kunststoffumspritzung in den Spanndeckel eingebettet sein.

In einer anderen bevorzugten Ausgestaltung weist der Zellverbinder einen Stützabschnitt auf, der auf einer Oberfläche des Spanndeckels aufliegt. Es hat sich als vorteilhaft herausgestellt, wenn der Zellverbinder ein von dem Spanndeckel verschiedenes Bauteil ist.

In einer besonders bevorzugten Ausgestaltung weist der Akkuzellenträger einen zylindrischen Wulst auf in den der Spanndeckel eingepresst ist. Es hat sich als vorteilhaft herausgestellt, wenn der Spanndeckel einen Spannabschnitt aufweist, der, wenn der Spanndeckel in dem Akkuzellenträger eingepresst ist, eine Radialspannkraft auf die Akkuzelle aufbringt. In einer besonders bevorzugten Ausgestaltung wird durch eine am Wulst ausgebildete geneigte Flanke erreicht, dass der Spannabschnitt im Zuge eines Einschiebens der Akkuzelle in den Akkuzellenträger in radialer Richtung nach innen bewegt wird, bis der Spannabschnitt die Akkuzelle verspannt.

In einer weiteren bevorzugten Ausgestaltung ist ein Außendurchmesser der Akkuzelle kleiner als ein Innendurchmesser des Akkuzellenträgers. Es hat sich als vorteilhaft herausgestellt, wenn der Akkuzellträger in axialer Richtung länger ist als die zylindrischen Akkuzelle.

Es hat sich weiterhin als vorteilhaft herausgestellt, wenn der Spanndeckel eine zentrale Öffnung aufweist. Der Zellverbinder kann sich abschnittsweise in der zentralen Öffnung befinden und/oder durch die zentrale Öffnung hindurchragen. Ein Öffnungsdurchmesser der zentralem Öffnung kann gleich oder größer sein als der Außendurchmesser der Akkuzelle. In einer besonders bevorzugten Ausgestaltung wird der Spanndeckel schraubenfrei an dem Akkuzellenträger gehalten.

Es hat sich als ebenfalls als vorteilhaft herausgestellt, wenn eine Mehrzahl von Akkuzellenträgern als Teil eines Akkupacks für er elektrischen Handwerkzeugmaschine vorgesehen sind, wobei die Spanndeckel vorzugsweise miteinander verbunden sind.

Bezüglich des Verfahrens wird die Aufgabe gelöst durch ein Verfahren zum Herstellen eines Akkuzellenträgers bei dem in einem ersten Schritt eine Akkuzelle in axialer Richtung in den Akkuzellenträger eingeschoben wird und in einem zweiten Schritt ein Spanndeckel stirnseitig am Akkuzellenträger angeordnet und vorzugsweise gleichzeitig ein metallischer Zellverbinder auf die Akkuzelle aufgelötet wird, sodass der Spanndeckel in axialer Richtung durch den Zellverbinder an der Akkuzelle gehalten wird.

Das Verfahren kann durch die mit Bezug auf die Vorrichtung beschriebenen Merkmale in entsprechender Weise weitergebildet sein. Es hat sich als vorteilhaft herausgestellt, wenn die Akkuzelle im Zuge des Anordnen des Spanndeckels in radialer Richtung verspannt wird.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:
- Figur 1: ein erstes bevorzugtes Ausführungsbeispiel eines Akkuzellenträgers;
- Figur 2: ein zweites bevorzugtes Ausführungsbeispiel eines Akkuzellenträgers;
- Figur 3: eine perspektivische Darstellung eines Akkupacks; und
- Figur 4: ein bevorzugtes Verfahren zum Herstellen eines Akkuzellenträgers.

### Ausführungsbeispiele:

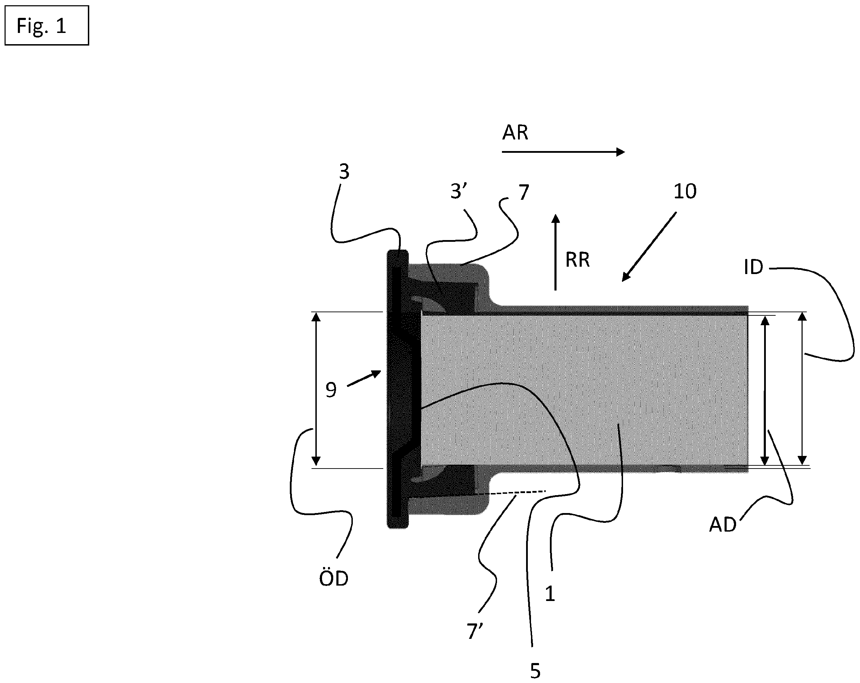

Ein erstes bevorzugtes Ausführungsbeispiel eines Akkuzellenträgers 10 in Schnittdarstellung ist in Figur 1 dargestellt. Der Akkuzellenträger 10 weist eine zylindrischen Akkuzelle 1 auf, die in axialer Richtung AR in den Akkuzellenträger 10 eingeschobenen wurde. Der Akkuzellträger 10 ist in axialer Richtung AR länger als die zylindrischen Akkuzelle 1. Ein Außendurchmesser AD der Akkuzelle 1 ist dabei kleiner als ein Innendurchmesser ID des Akkuzellenträgers 10. Mit anderen Worten ist die Akkuzelle 1 selbst nicht in den Akkuzellenträger 10 eingepresst.

Die Akkuzelle 1 ist mittels eines aufgelöteten metallischen Zellverbinders 5 elektrisch kontaktiert. Der Akkuzellenträger 10 weist einen stirnseitig angeordneten Spanndeckel 3 auf, der in axialer Richtung AR durch den Zellverbinder 5 an der Akkuzelle 3 gehalten wird. Dabei ist der Zellverbinder 5 abschnittsweise in den aus Kunststoff bestehenden Spanndeckel 3 mittels Kunststoffumspritzung eingebettet. Der Spanndeckel 3 weist eine zentrale Öffnung 9 auf in welche der Zellverbinder 5 abschnittsweise befindlich ist. Ein Öffnungsdurchmesser ÖD der zentralem Öffnung 9 ist dabei größer ist als der Außendurchmesser AD der Akkuzelle 1.

Wie der Figur 1 entnommen werden kann, weist der Akkuzellenträger 10 einen zylindrischen Wulst 7 auf in den der Spanndeckel 3 eingepresst ist. Dabei weist der Spanndeckel 3 einen Spannabschnitt 3` auf, der, wenn der Spanndeckel 3 in dem Akkuzellenträger 10 eingepresst ist, eine Radialspannkraft auf die Akkuzelle 1 aufbringt. Durch die an dem zylindrischen Wulst 7 ausgebildete geneigte Flanke 7` wird der Spannabschnitt 3` im Zuge eines Einschiebens der Akkuzelle 1 in den Akkuzellenträger 10 in radialer Richtung RR nach innen bewegt bis der Spannabschnitt 3` schließlich die Akkuzelle 1 verspannt.

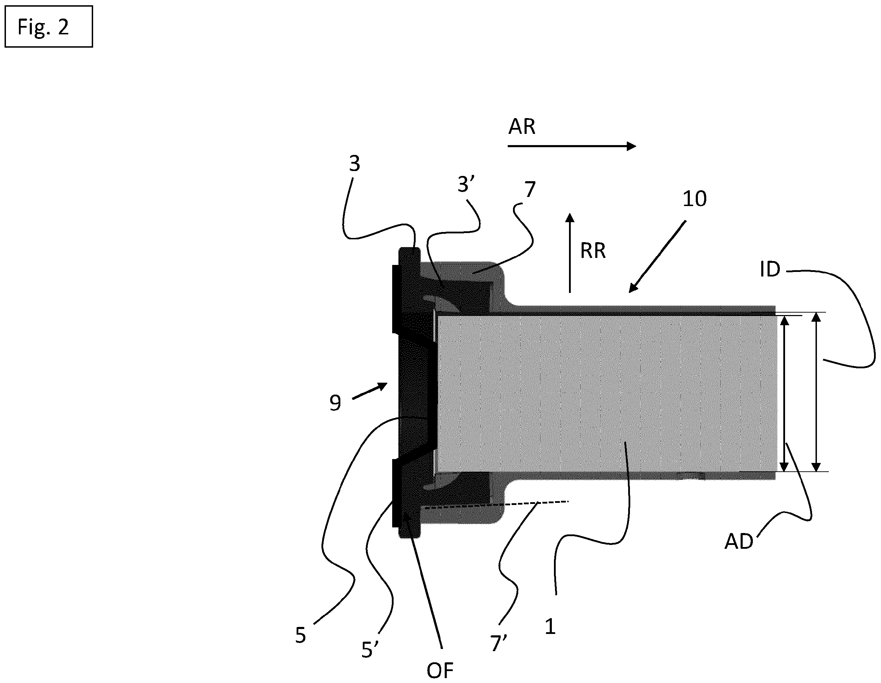

Ein zweites bevorzugtes Ausführungsbeispiel eines Akkuzellenträgers 10 in Schnittdarstellung ist in Figur 2 dargestellt. Im Unterschied zum Ausführungsbeispiel der Figur 1 ist der Zellverbinder 5 nicht in den aus Kunststoff bestehenden Spanndeckel 3 eingebettet. Vielmehr ragt der Zellverbinder 5 abschnittweise durch die zentrale Öffnung 9 hindurch und weist einen Stützabschnitt 5` auf, der auf einer Oberfläche OF des Spanndeckels 3 aufliegt. Dementsprechend wird der stirnseitig angeordnete Spanndeckel 3 ebenfalls in axialer Richtung AR durch den Zellverbinder 5 an der Akkuzelle 3 gehalten.

Die Ausführungsbeispiele der Figur 1 und 2 haben den Vorteil, dass der Spanndeckel 3 jeweils schraubenfrei an dem Akkuzellenträger gehalten wird.

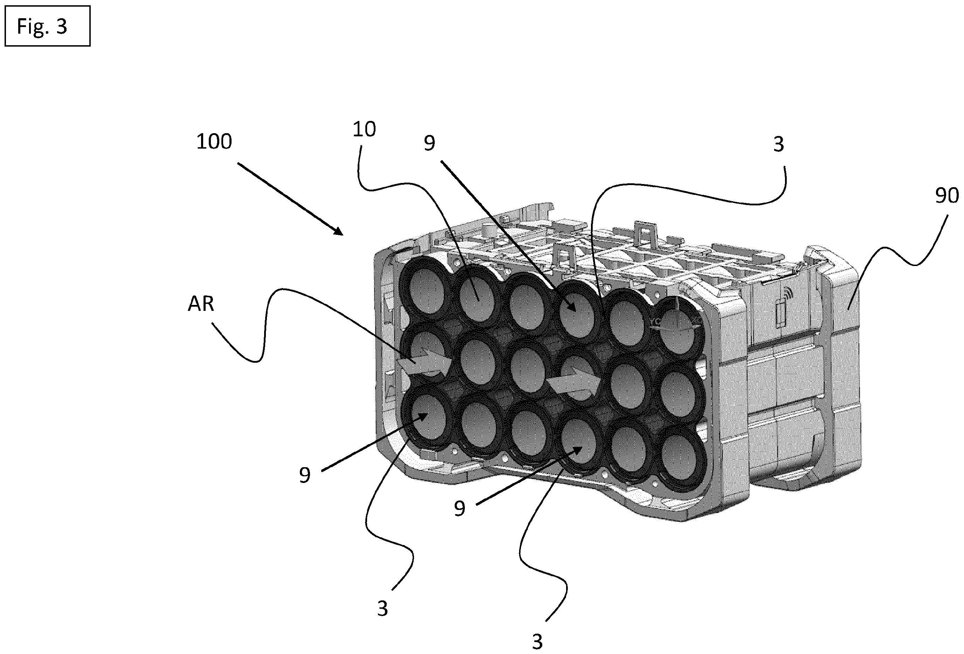

Figur 3 zeigt in perspektivischer Darstellung einen Akkupack 100 in dessen Gehäuse 90 hier beispielhaft achtzehn Akkuzellenträger 10 eingebracht sind. Die Akkuzellen und die Zellverbinder sind hierbei nicht dargestellt. Gut zu erkennen sind die aus Kunststoff bestehenden Spanndeckel 3, die nach Art eines Gitters mit Reihen und Spalten miteinander verbunden sind. Im vorliegend dargestellten Ausführungsbeispiel sind die Spanndeckel 3 aller Akkuzellenträger 10 miteinander einstückig aus Kunststoff ausgebildet.

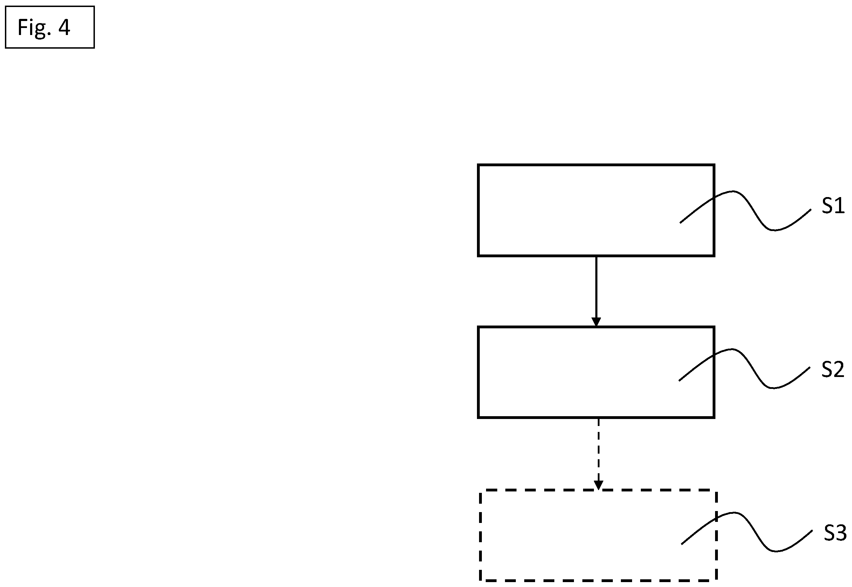

Figur 4 zeigt schließlich in schematischer Darstellung ein Verfahren zum Herstellen eines Akkuzellenträgers.

In einem ersten Schritt S1 wird eine Akkuzelle in axialer Richtung in den Akkuzellenträger eingeschoben. In einem sich anschließenden zweiten Schritt S2 wird ein Spanndeckel stirnseitig am Akkuzellenträger angeordnet und gleichzeitig ein metallischer Zellverbinder auf die Akkuzelle aufgelötet, sodass der Spanndeckel in axialer Richtung durch den Zellverbinder an der Akkuzelle gehalten wird. Die entspricht einem bevorzugten Herstellungsverfahren des Akkuzellenträgers der Figur 1 bei dem der Zellverbinder abschnittsweise in den aus Kunststoff bestehenden Spanndeckel mittels Kunststoffumspritzung eingebettet ist.

Ein gleichzeitiges Anordnen des Spanndeckels und Auflöten des Zellverbinders ist grundsätzlich auch bei dem Akkuzellenträger der Figur 2 - bei dem der Zellverbinder und der Spanndeckel verschiedene (zerstörungsfrei voneinander trennbare) Teile sind - möglich. Alternativ ist es bei der Herstellung des Akkuzellenträgers der Figur 2 auch möglich in dem zweiten Schritt S2 zunächst einen Spanndeckel stirnseitig am Akkuzellenträger anzuordnen und in einem sich anschließenden Schritt S3 (in Figur 4 gestrichelt dargestellt) einen metallischen Zellverbinder auf die Akkuzelle aufzulöten, sodass der Spanndeckel in axialer Richtung durch den Zellverbinder an der Akkuzelle gehalten wird.

### Bezugszeichenliste

- 1: Akkuzelle
- 3: Spanndeckel
- 3`: Spannabschnitt
- 5: Zellverbinder
- 5`: Stützabschnitt
- 7: Wulst
- 7`: geneigte Flanke
- 9: zentrale Öffnung
- 10: Akkuzellenträger
- 90: Gehäuse
- 100: Akkupack

- AD: Außendurchmesser der Akkuzelle
- AR: axiale Richtung
- ID: Innendurchmesser des Akkuzellenträgers
- OF: Oberfläche des Spanndeckels
- ÖF: Öffnungsdurchmesser
- RR: radiale Richtung

- S1: erster Verfahrensschritt
- S1: zweiter Verfahrensschritt

## Patentansprüche

1. Akkuzellenträger (10) mit einer in axialer Richtung (AR) darin eingeschobenen zylindrischen Akkuzelle (1), wobei die Akkuzelle (1) mittels eines aufgelöteten metallischen Zellverbinders (5) elektrisch kontaktiert ist,
**dadurch gekennzeichnet, dass** der Akkuzellenträger (10) einen stirnseitig angeordneten Spanndeckel (3) aufweist, der in axialer Richtung (AR) durch den Zellverbinder (5) an der Akkuzelle (3) gehalten wird.

2. Akkuzellenträger (10) nach Anspruch 1,
**dadurch gekennzeichnet, dass** der Zellverbinder (5) abschnittsweise in den Spanndeckel (3) eingebettet ist.

3. Akkuzellenträger (10) nach Anspruch 1,
**dadurch gekennzeichnet, dass** der Zellverbinder (5) einen Stützabschnitt (5`) aufweist, der auf einer Oberfläche (OF) des Spanndeckels (3) aufliegt.

4. Akkuzellenträger (10) nach einem der vorangehenden Ansprüche,
**dadurch gekennzeichnet, dass** der Akkuzellenträger (10) einen zylindrischen Wulst (7) aufweist in den der Spanndeckel (3) eingepresst ist.

5. Akkuzellenträger (10) nach Anspruch 4,
**dadurch gekennzeichnet, dass** der Spanndeckel (3) einen Spannabschnitt (3`) aufweist, der, wenn der Spanndeckel (3) in dem Akkuzellenträger (10) eingepresst ist, eine Radialspannkraft auf die Akkuzelle (1) aufbringt.

6. Akkuzellenträger (10) nach einem der vorangehenden Ansprüche,
**dadurch gekennzeichnet, dass** ein Außendurchmesser (AD) der Akkuzelle (1) kleiner ist als ein Innendurchmesser (ID) des Akkuzellenträgers (10).

7. Akkuzellenträger (10) nach einem der vorangehenden Ansprüche,
**dadurch gekennzeichnet, dass** der Akkuzellträger (10) in axialer Richtung (AR) länger ist als die zylindrischen Akkuzelle (1).

8. Akkuzellenträger (10) nach einem der vorangehenden Ansprüche,
**dadurch gekennzeichnet, dass** der Spanndeckel (3) eine zentrale Öffnung (9) aufweist.

9. Akkuzellenträger (10) nach einem der vorangehenden Ansprüche,
**dadurch gekennzeichnet, dass** ein Öffnungsdurchmesser (ÖD) der zentralem Öffnung (9) gleich oder größer ist als der Außendurchmesser (AD) der Akkuzelle (1).

10. Akkuzellenträger (10) nach einem der vorangehenden Ansprüche,
**dadurch gekennzeichnet, dass** der Spanndeckel schraubenfrei an dem Akkuzellenträger gehalten wird.

11. Akkupack (100) mit einer Mehrzahl von Akkuzellenträgem (10) nach einem der vorangehenden Ansprüche, wobei die Spanndeckel miteinander verbunden sind.

12. Verfahren zum Herstellen eines Akkuzellenträgers (10) bei dem in einem ersten Schritt (S1) eine Akkuzelle in axialer Richtung in den Akkuzellenträger eingeschoben wird und in einem zweiten Schritt (S2) ein Spanndeckel stirnseitig am Akkuzellenträger angeordnet und vorzugsweise gleichzeitig ein metallischer Zellverbinder auf die Akkuzelle aufgelötet wird, sodass der Spanndeckel in axialer Richtung durch den Zellverbinder an der Akkuzelle gehalten wird.
